# EUROPEAN PATENT SPECIFICATION

(11) **EP 1 900 397 B1**
(45) Date of publication and mention of the grant of the patent: **17.12.2008**
(21) Application number: 06120529.0
(22) Date of filing: 12.09.2006
(51) Int. Cl.: A63B 55/08, B62B 5/00, B62B 3/12

(54) **Electric cart**
Motorangetriebener Wagen
Chariot motorisé

(43) Date of publication of application: 19.03.2008
(73) Proprietor: Chiu, Po-Lin, Zuoyung, 813 Kaohsiung City (TW); Tsai, Shern-Ji, Sanmin, 807 Kaohsiung City (TW); Chang, Ching-Piao, FongShan City Kao hsiung 830 (TW)
(72) Inventor: Chiu, Po-Lin, Zuoyung, 813 Kaohsiung City (TW); Tsai, Shern-Ji, Sanmin, 807 Kaohsiung City (TW); Chang, Ching-Piao, FongShan City Kao hsiung 830 (TW)
(74) Representative: Viering, Jentschura & Partner

(56) References cited:
- EP-A- 1 481 887
- AU-B2- 441 701
- DE-A1- 10 008 451
- DE-A1- 10 158 201
- US-B1- 6 481 518

## Description

### BACKGROUND OF THE INVENTION

### 1. Field of the Invention

The present invention generally relates to a vehicle design, more particular to this vehicle is equipped with an auxiliary propelling device and an electric motor for powering the power assisted vehicle.

### 2. Description of the Related Art

Conventional electric vehicles and light transportations usually rely on electric motors to transmit power. For designing traditional motors, external gears, belts are utilized to drive tires for rotating. However, the speeds for those transportations are to regulate voltages to achieve. The regulation may consume electricity and torsions generated by motors may be easily affected by the available capacity remaining in batteries. For any type of transmission mechanism, the precision requirement is really high and the noise is quite loud. The transmission mechanism may also have larger volume and weight.

To overcome the foregoing shortcomings, the inventor of the present invention based on years of experience in the related field to conduct extensive researches and experiments, and finally invented a power assisted vehicle as a method or a basis for achieving the aforementioned objective.

EP 1 647 312 A1 discloses a power assisted vehicle according to the preamble of claim 1.

### SUMMARY OF THE INVENTION

Accordingly, it is an objective of the present invention to provide a power assisted vehicle that is capable of self-propelled going forward, reduces the consumption on power provided by batteries, and improves transmission efficiency.

The above objective is accomplished by the special technical features of claim 1.

### BRIEF DESCRIPTION OF THE DRAWINGS

The accompanying drawing is included to provide a further understanding of the invention, and is incorporated in and constitutes a part of this specification. The drawing illustrates an embodiment of the invention and, together with the description, serves to explain the principles of the invention. In the drawing,
FIG. 1 is an exploded assembly drawing of a power assisted vehicle according to a preferred embodiment of the present invention;
FIG. 2 is an exploded assembly drawing of the auxiliary propelling device of the present invention;
FIG. 3 is a cross-sectional drawing of the auxiliary propelling device of the present invention;
FIG. 4 is a schematic diagram of the auxiliary propelling device of the present invention;
FIG. 5 is a schematic diagram of the power assisted vehicle after folding according to a preferred embodiment of the present invention;
FIG. 6 is a pictorial drawing of the power assisted vehicle according a preferred embodiment of the present invention;
FIG. 7 is a pictorial drawing of the power assisted vehicle according to another preferred embodiment of the present invention; and
FIG. 8 is a cross-sectional drawing of the auxiliary propelling device according to another preferred embodiment of the present invention.

### DETAILED DESCRIPTION OF THE PREFERRED EMBODIMENTS

Wherever possible, the same reference numbers are used in the drawings and the description to refer to the same or like parts.

Referring to the related figures for the power assisted vehicle according to a preferred embodiment of the present invention, wherein the same elements are described by the same reference numerals.

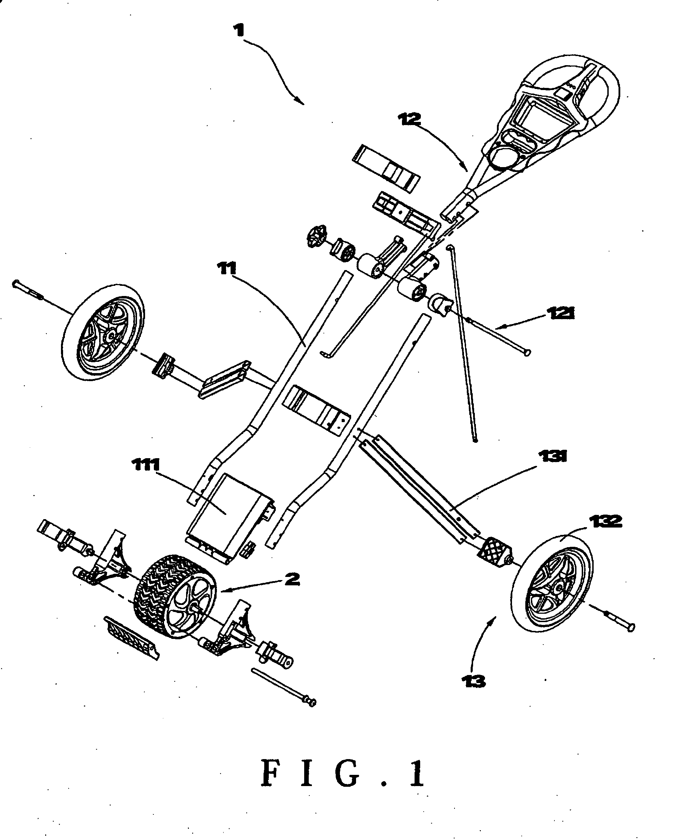

Referring to FIG. 1, an exploded assembly drawing of a power assisted vehicle according to a preferred embodiment of the present invention. The power assisted vehicle 1 comprises a frame body 11, a pushing handlebar 12 pivoted to the frame body 11, a wheel portion 13 disposed on the frame body 11 and an auxiliary propelling device 2. An external power 111 (e.g. a battery) is disposed on the frame body 11. The external power 111 can be easily replaced to keep power supplied by the external power 111. In addition, a pivot point between the pushing handlebar 12 and the frame body 11 having a positioning member 121 (e.g. screws screwed to nuts as shown in FIG. 1). The pushing handlebar 12 is folded by loosening or by tightening the positioning member 121. The pushing handlebar 12 is unfolded as shown in the embodiment. The wheel portion 13 has two fastening frames 131 pivoted to the frame body 11 and driven wheels 132 disposed to the fastening frames 131.

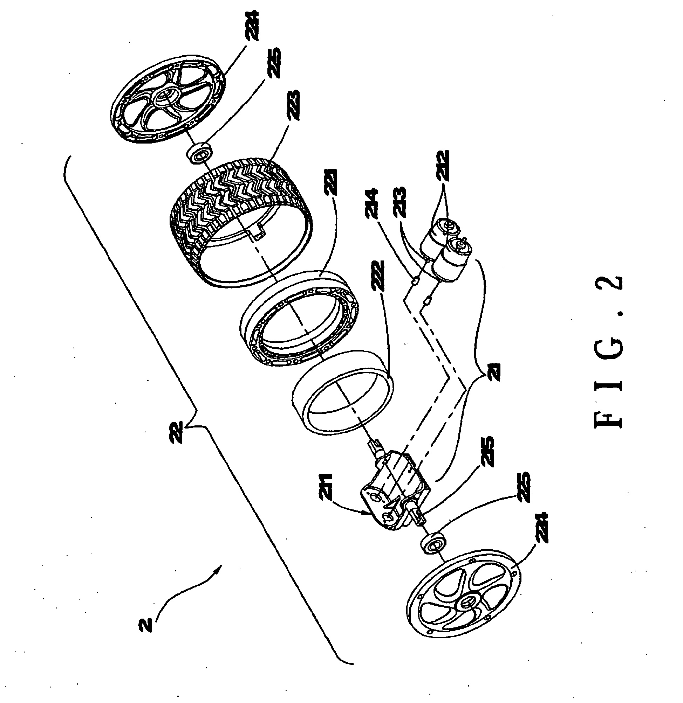

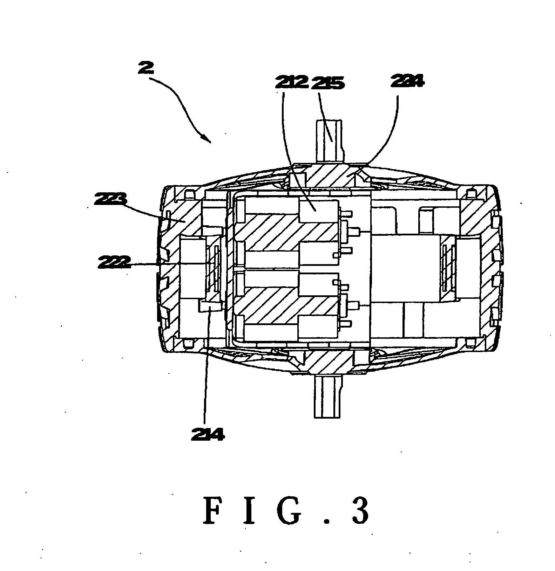

Referring to FIG. 2 and FIG. 3, shown an auxiliary propelling device 2 preferable configured with downwardly depending on the frame body 11. The auxiliary propelling device 2 has a transmission portion 21 disposed on the frame body 11 and an auxiliary wheel 22 driven by the transmission portion 21. The transmission portion 21 can be disposed by at least two sets. There is only one set shown in the embodiment. The transmission portion 21 includes a supporting base 211 disposed on the frame body 11; two power sources 212 (e.g. motors as shown in FIG. 2) disposed on the supporting base 211, a transmission shaft 213 protruded from each power source 212 and a friction piece 214 disposed on each transmission shaft 213. Two sides of the supporting base 211 having protruded to fastening shafts 215. The fastening shaft 215 is a precision aluminum die-casting that can be fastened on the frame body 11. Moreover, the two power sources 212 are electrically connected to the external power 111. The two power sources 212 then drive the transmission shafts 213 for rotating. Meanwhile, the two power sources 212 turning different rotation directions to allow the two friction pieces 214 to have different rotation directions.

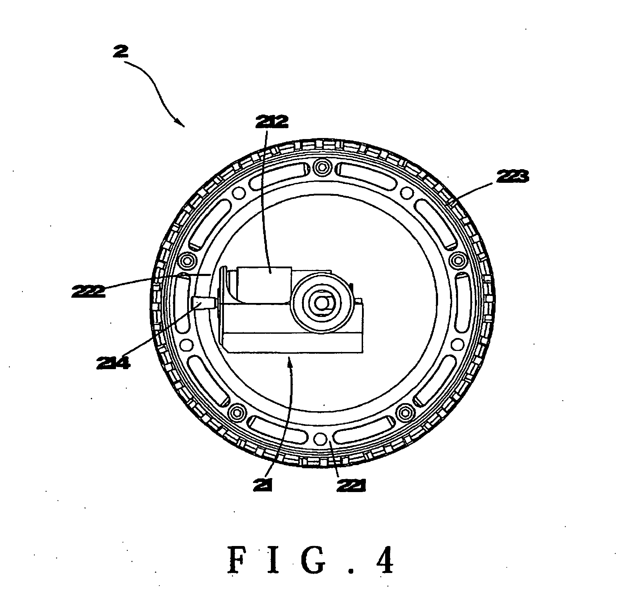

Referring to FIG. 4, the auxiliary wheel 22 includes a wheel rim 221 surrounded the outside of the supporting base 211, a friction ring 222 fastened on the wheel rim 221, a tire 223 fastened on the wheel rim 221 and reversed to the friction ring 222, wherein cover bodies 224 covered with two sides of the wheel rim 221. After the cover bodies 224 cover with the wheel rim 221, the transmission portion 21 is then fastened into the wheel rim 221 to improve waterproof and dustproof performances. Moreover, the cover bodies 224 are pivoted to the fastening shafts 215. To help the rotation of the wheel rim 221; a bearing 225 is disposed between the wheel rim 221 and the fastening shafts 215. In addition, the friction ring 222 is a flexible material with wear resistance. Two sides of the friction ring 222 secured with the friction pieces 214. Powers supplied by the power sources 212 then drive the friction ring 222, the wheel rim 221 and the tire 223 for synchronously rotating through the friction pieces 214.

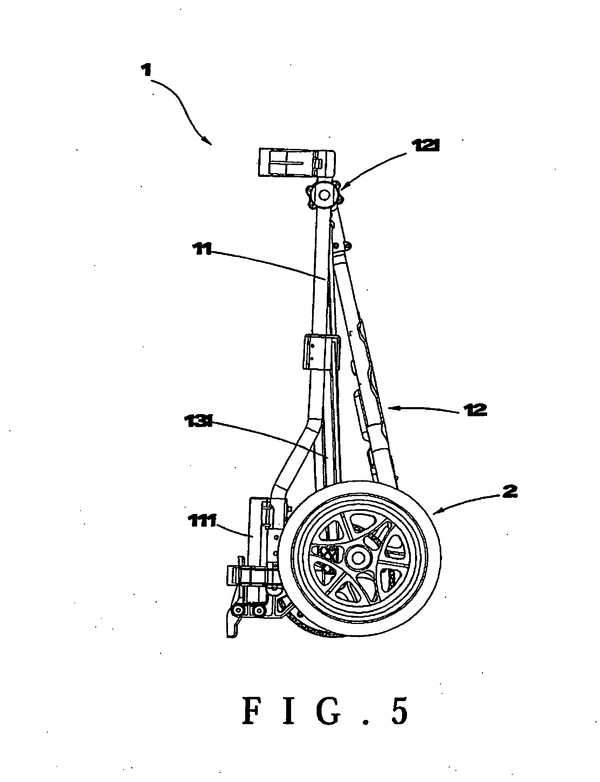

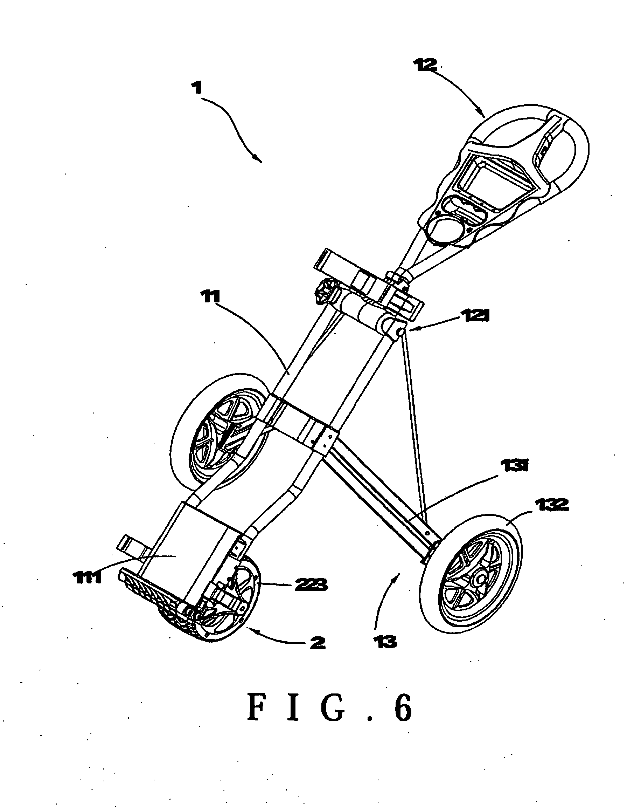

Referring to FIG. 5, firstly, before using the power assisted vehicle 1, the pushing handlebar 12 is folded downward and leans against the frame body 11 by loosening the positioning member 121. The fastening frames 131 is then driven to approach the frame body 11 as shown in FIG. 5. Therefore, the power assisted vehicle 1 can be easily stored. While using the power assisted vehicle 1, the pushing handlebar 12 is lifted. The power assisted vehicle 1 is then expanded as shown in FIG. 6. Before the power assisted vehicle 1 performs self-propelled going forward, a thrust pushes the power assisted vehicle 1. The tire 223 sequentially drives the wheel rim 221, the friction ring 222 and the transmission shafts 213 for rotating. Next, by incorporating with two power sources 212, the tire 223 then rotates backward as driven by two power sources 212. In another word, when two power sources 212 transmit powers, the friction ring 222 is clipped through two power sources 212. Hence, one power source 212 rotates clockwise and the other power source 212 rotates counterclockwise to avoid shake generated by the friction ring 222 while rotating. The transmission loss of the power assisted vehicle 1 is then decreased to the minimum. When current is increased for one power source 212, current is then decreased for the other power source 212. Current consumption can be steadied. There is no unstable load current for the power sources 212 due to the shaking of the friction ring222. The service life of the power sources 212 and the speed of the power assisted vehicle 1 would not be influenced. Greater voltages required for activating the power sources 212 are further overcome when the power assisted vehicle 1 starts going forward from a stop state. The power consumption of the external power 111 is also decreased to the minimum. Therefore, the transmission efficiency is improved and the consumption of battery capacity is decreased.

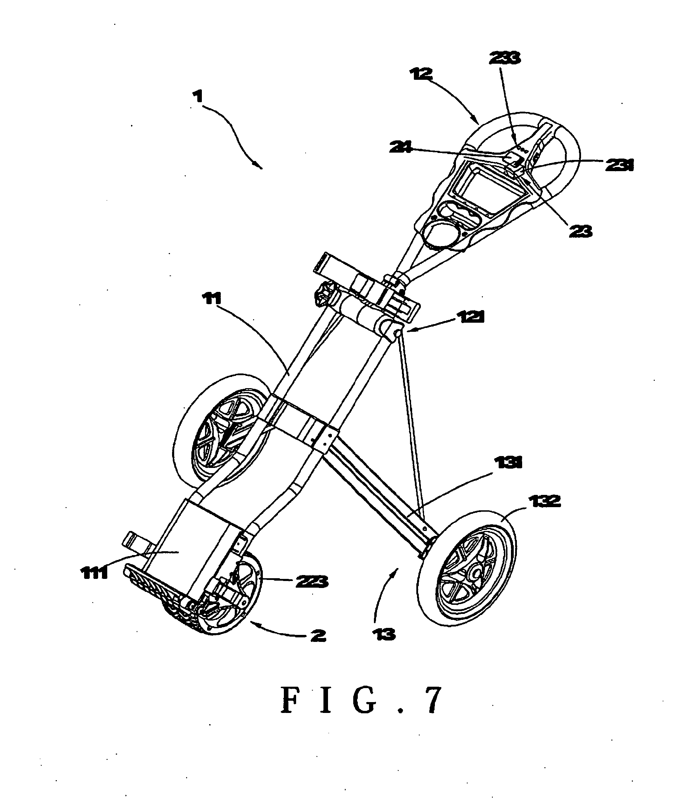

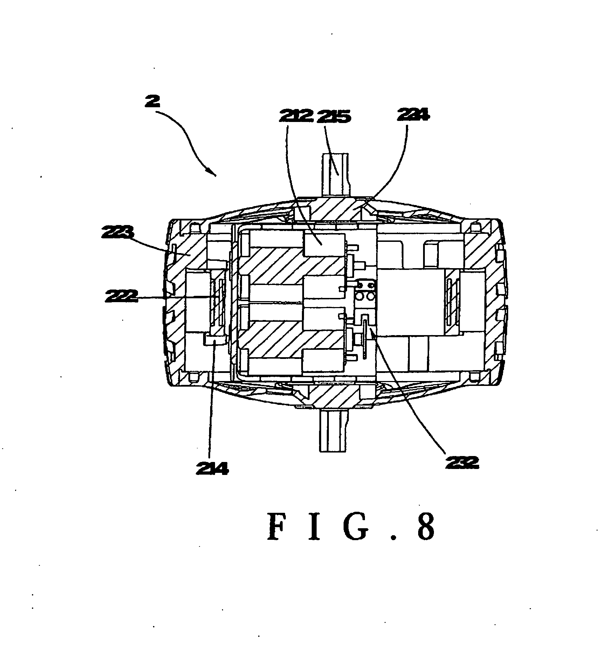

Referring to FIG. 7 and FIG. 8, a pictorial drawing of the power assisted vehicle 1 according to another preferred embodiment of the present invention is illustrated. The power assisted vehicle 1 comprises a frame body 11, a pushing handlebar 12 pivoted to the frame body 11, a wheel portion 13 disposed on the frame body 11 and an auxiliary propelling device 2. In the embodiment, a processing device 23 is connected to the power sources 212. The processing device 23 having a processing unit 231, and a sensor 232 disposed to a side of the transmission shaft 213 and a controller 233 disposed on the frame body 11, wherein the sensor 232 and the controller 233 are connected to the processing unit 231. The sensor 232 transmits rotational speed data of the transmission shafts 213 to the processing unit 231 for calculation. A screen 24 is added to the frame body 11. The screen 24 is also connected to the processing device 23.

The controller 233 is utilized to set speeds for the power assisted vehicle 1. The screen 24 is also utilized to read data (e.g. current speeds, predetermined speeds, state-of-charge) of the power assisted vehicle 1. When the power assisted vehicle 1 performs self-propelled going forward, a thrust pushes the power assisted vehicle 1 to drive the transmission shafts 213 for rotating. The sensor 232 then detects the rotational speeds of the transmission shafts 213. If the rotational speeds are greater than a predetermined value (1 kilometer per hour, 1km/hr) in the processing unit 231, the processing unit 231 calculates the minimum voltages and current required for achieving the predetermined rotational speeds of the power sources 212. The voltages and current of the external power 111 are regulated to provide the power sources 212 to drive the transmission shafts 213 for rotating. The tire 223 is then driven to operate the power assisted vehicle 1 to perform self-propelled going forward. When the predetermined speed is achieved gradually, a user does not need to put the thrust. When the power assisted vehicle 1 starts going forward from the stop state, the greater voltages required for activating the power sources 212 are also overcome. The consumption of the external power 111 is then decreased to the minimum.

During operation and use, the power assisted vehicle 1 performs self-propelled going forward as above-mention and if the user puts an auxiliary thrust, the processing unit 231 then calculates and regulates output voltages and amperes of current to improve power saving efficiency for the power assisted vehicle 1. Of course, when the power assisted vehicle 1 faces hillsides or grassland to which the sensor 232 can detect. The processing unit 231 then controls the external power 111 to increase output powers for the power sources 212. The speed is then set at a setting speed. When the power assisted vehicle 1 faces a downhill or flats, the situation is reversed. Once the power assisted vehicle 1 faces a descent without any help, the processing unit 231 controls the external power 111 to output the maximum power for the power sources 212 to keep the setting speed. Once powers are not enough, the current speed is set to be the terminal speed. If the speed is under 1km/hr, the processing unit 231 stops the operating of the power sources 212, and needs help from users until the speed returns to 1km/hr, the processing unit 231 then takes over. The aforementioned design may help the power assisted vehicle 1 on the electricity consumption and the service life. By adding the auxiliary propelling device 2, the power assisted vehicle 1 is capable of self-propelled going forward. Energy consumption is then reduced and transmission efficiency is then improved while in use. The service life is also extended substantially.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A power assisted vehicle (1) comprising:
a frame body (11);
a pushing handlebar (12) for pivoting on said frame body (11); a wheel portion (13) having a fastening frame (131) pivoted to said frame body (11), and having at least two driven wheels disposed on said fastening frame (131); and
an auxiliary propelling device (2) having a transmission portion (21) disposed on said frame body (11), and having an auxiliary wheel (22) driven by said transmission portion (21); wherein said transmission portion (21) comprises a supporting base (211) which is disposed on said frame body (11); two power sources (212) disposed on said supporting base (211), a transmission shaft (213) protruded from each said power source (212) , and the two sides of said supporting base (211) respective extending to a fastening shaft (215); and said auxiliary wheel (22) surrounds the outside of said supporting base (211), and said auxiliary wheel (22) comprises a wheel rim (221) surrounded the outside of said supporting base (211), a friction ring (222), a tire (223) fastened on said wheel rim and reversed to said friction ring (222) and cover bodies (224) covered with two sides of said wheel rim, and said wheel rim (221) is pivoted to said fastening shaft (215),
**characterised in that** a friction piece (214) is disposed to each said transmission shaft (213), and said two power sources (212) have different rotation directions to allow said two friction pieces (214) to have different rotation directions, and the friction ring (222) is fastened on said wheel rim (221) and two sides of said friction ring secured to said friction pieces (214), and power provided by said power sources synchronously drive said friction ring (221), said wheel rim and said tire (223) for rotating through said two friction pieces (214).

2. The power assisted vehicle as claimed in claim 1, wherein said power sources (212) are disposed to a processing device (23), and said processing device (23) has a processing unit (231), a sensor (232) secured to a side of said transmission shaft (213), and a controller (233) secured to said frame body (11), and said sensor (232) and said controller (233) are connected to said processing unit (231), and said sensor (232) transmits rotational speed data generated from said transmission shaft (213) to said processing unit (231) for operations to calculate optimum rotational speeds for said power sources.

3. The power assisted vehicle as claimed in claim 1, wherein a pivot point between said frame body (11) and said pushing handlebar (12) having a positioning member (121), and said pushing handlebar (12) is folded by loosening or by tightening depending on said positioning member.

4. The power assisted vehicle as claimed in claim 1, wherein said transmission portion is disposed by at least two sets.

5. The power assisted vehicle as claimed in claim 1, wherein at least one friction wheel is provided, and the peripheral of said friction wheel is cone, and said friction wheel plating a layer of chromium covers in order to increase wear resistance.

## Patentansprüche

1. Antriebskraftunterstützes Fahrzeug (1), aufweisend:
einen Rahmenkörper (11),
einen Schiebehandgriff (12) zum Verschwenken an dem Rahmenkörper (11), einen Radteil (13) mit einem Befestigungsrahmen (131), der an dem Rahmenkörper (11) verschwenkbar ist, und mit wenigstens zwei angetriebenen Rädern, die an dem Befestigungsrahmen (131) angeordnet sind, und
eine Hilfsantriebseinrichtung (2) mit einem an dem Rahmenkörper (11) angeordneten Getriebeteil (21) und mit einem vom Getriebeteil (21) angetriebenen Hilfsrad (22), wobei der Getriebeteil (21) eine Trägerbasis (211), die an dem Rahmenkörper (11) angeordnet ist, zwei auf der Trägerbasis (211) angeordnete Antriebskraftquellen (212) und eine von jeder Antriebskraftquelle (212) hervorstehende Antriebswelle (213) aufweist, wobei sich die zwei Seiten der Trägerbasis (211) jeweils zu einer Befestigungsachse (215) erstrecken, wobei das Hilfsrad (22) die Außenseite der Trägerbasis (211) umgibt und das Hilfsrad (22) eine die Außenseite der Trägerbasis (211) umgebende Radfelge (221), einen Reibring (222), einen Reifen (223), der auf der Radfelge befestigt ist und dem Reibring (222) gegenüberliegt, und Abdeckungskörper (224) aufweist, die zwei Seiten der Radfelge abdecken, wobei die Radfelge (221) an der Befestigungswelle (215) drehbar ist,
**dadurch gekennzeichnet, dass** ein Reibstück (214) an jeder Antriebswelle (213) angeordnet ist und die zwei Antriebskraftquellen (212) unterschiedliche Drehrichtungen aufweisen, so dass die zwei Reibstücke (214) zwei unterschiedliche Drehrichtungen aufweisen, und dass der Reibring (222) an der Radfelge (221) angebracht ist und zwei Seiten des Reibrings an den Reibstücken (214) angebracht sind, wobei von den Antriebskraftquellen bereitgestellte Leistung über die zwei Reibstücke (214) den Reibring (221), die Radfelge und den Reifen (223) zum Drehen synchron antreibt.

2. Antriebskraftunterstützes Fahrzeug nach Anspruch 1, wobei die Antriebskraftquellen (212) an einer Verarbeitungseinrichtung (23) angeordnet sind und die Verarbeitungseinrichtung (23) eine Verarbeitungseinheit (231), einen an einer Seite der Antriebswelle (213) angebrachten Sensor (232) und einen am Rahmenkörper (11) angebrachten Controller (233) aufweist, wobei der Sensor (232) und der Controller (233) mit der Verarbeitungseinheit (231) verbunden sind und der Sensor (232) von der Antriebswelle (213) erzeugte Drehzahldaten an die Verarbeitungseinheit (231) für Betätigungen überträgt, um optimale Drehzahlen für die Antriebskraftquellen zu berechnen.

3. Antriebskraftunterstützes Fahrzeug nach Anspruch 1, wobei ein Schwenkpunkt zwischen dem Rahmenkörper (11) und dem Schiebehandgriff (12) ein Positionierelement (121) aufweist und der Schiebehandgriff (12) durch Lösen oder durch Festziehen in Abhängigkeit von dem Positionierelement zusammengeklappt wird.

4. Antriebskraftunterstützes Fahrzeug nach Anspruch 1, wobei der Getriebeteil aus wenigstens zwei Sätzen gebildet ist.

5. Antriebskraftunterstützes Fahrzeug nach Anspruch 1, wobei wenigstens ein Reibrad bereitgestellt ist und die Außenfläche des Reibrads konisch ist, wobei das Reibrad mit einem Überzug aus einer Schicht aus Chrom abgedeckt ist, um die Verschleißfestigkeit zu erhöhen.

## Revendications

1. Véhicule motorisé (1) comprenant :
un corps de châssis (11) ;
un guidon de poussée (12) destiné à pivoter sur ledit corps de châssis (11) ; une partie de roue (13) comportant une structure de fixation (131) pivotant sur ledit corps de châssis (11), et comportant au moins deux roues entraînées disposées sur ladite structure de fixation (131) ; et
un dispositif de propulsion auxiliaire (2) comportant une partie de transmission (21) disposée sur ledit corps de châssis (11), et comportant une roue auxiliaire (22) entraînée par ladite partie de transmission (21) ; dans lequel ladite partie de transmission (21) comprend une base de support (211) qui est disposée sur ledit corps de châssis (11) ; deux sources d'entraînement (212) disposées sur ladite base de support (211), un arbre de transmission (213) en saillie à partir de chaque dite source d'entraînement (212), et les deux côtés de ladite base de support (211) s'étendant respectivement vers un arbre de fixation (215), et ladite roue auxiliaire (22) entoure l'extérieur de ladite base de support (211), et ladite roue auxiliaire (22) comprend une jante de roue (221) entourant l'extérieur de ladite base de support (211), une bague de friction (222),
un pneu (223) fixé sur ladite jante de roue et inversé par rapport à ladite bague de friction (222) et des corps d'obturation (224) obturant avec les deux côtés de ladite jante de roue, et ladite jante de roue (221) pivote sur ledit arbre de fixation (215),
**caractérisé en ce qu'**une pièce de friction (214) est disposée sur chaque dit arbre de transmission (213), et lesdites deux sources d'entraînement (212) présentent différents sens de rotation afin d'assurer des sens de rotation différents pour lesdites deux pièces de friction (214), et la bague de friction (222) est fixée sur ladite jante de roue (221), et deux côtés de ladite bague de friction fixée sur lesdites pièces de friction (214), et de la puissance délivrée par lesdites sources d'entraînement entraînent de manière synchrone ladite bague de friction (221), ladite jante de roue et ledit pneu (223) pour une mise en rotation par l'intermédiaire desdites deux pièces de friction (214).

2. Véhicule motorisé selon la revendication 1, dans lequel lesdites sources d'entraînement (212) sont disposées sur un dispositif de traitement (23), et ledit dispositif de traitement (23) présente une unité de traitement (231), un capteur (232) fixé sur un côté dudit arbre de transmission (213), et une unité de commande (233) fixée sur ledit corps de châssis (11), et ledit capteur (232) et ladite unité de commande (233) sont reliés à ladite unité de traitement (231), et ledit capteur (232) transmet des données de vitesse de rotation produites à partir dudit arbre de transmission (213) à ladite unité de traitement (231) afin de réaliser des opérations destinées à calculer des vitesses de rotation optimales desdites sources d'entraînement.

3. Véhicule motorisé selon la revendication 1, dans lequel un point pivot entre ledit corps de châssis (11) et ledit guidon de poussée (12) comporte un élément de positionnement (121), et ledit guidon de poussée (12) est replié par relâchement ou par serrage en fonction dudit élément de positionnement.

4. Véhicule motorisé selon la revendication 1, dans lequel ladite partie de transmission est agencée en au moins deux jeux.

5. Véhicule motorisé selon la revendication 1, dans lequel au moins une roue de friction est présente, et la périphérique de ladite roue de friction est conique, et le revêtement de ladite roue de friction est une couche de revêtement à base de chrome dans le but d'augmenter la résistance à l'usure.
